# EUROPEAN PATENT SPECIFICATION

(11) **EP 2 769 902 B1**
(45) Date of publication and mention of the grant of the patent: **08.01.2020**
(21) Application number: 14155316.4
(22) Date of filing: 17.02.2014
(51) Int. Cl.: B62K 19/40, B62J 11/00

(54) **Accessory socket layout structure of saddle-ride type vehicle**
Zubehörsteckdosenanordnungsstruktur eines Sattelfahrzeugs
Structure d'agencement de douille d'accessoire de véhicule de type à enfourcher

(30) Priority: 25.02.2013 JP 2013034462
(43) Date of publication of application: 27.08.2014
(73) Proprietor: Honda Motor Co., Ltd., Tokyo 107-8556 (JP)
(72) Inventor: Takizawa, Kota, Saitama, 351-0193 (JP); Ebato, Kaori, Saitama, 351-0193 (JP)
(74) Representative: Ahner, Philippe

(56) References cited:
- EP-A1- 2 017 174
- JP-A- S6 130 425
- JP-A- 2009 040 087
- US-A1- 2007 007 064
- US-A1- 2010 243 360

## Description

### [Technical Field]

The present invention relates to accessory socket layout structure of a saddle-ride type vehicle.

### [Background Art]

The background art document US 2007/007064 discloses an accessory socket layout structure for a saddle-ride type vehicle in accordance with the preamble of claim 1.

Heretofore, a saddle-ride type vehicle provided with an accessory socket on a rear wall of a housing box provided under a seat for an occupant is known (for example, refer to a patent literature 1).

### [Citation List]

### [Patent Literature]

[Patent Literature 1] JP-A No. 2009-40087

### [Summary of Invention]

### [Technical Problem]

However, in the above-mentioned conventional type accessory socket layout structure, as a main body of the accessory socket is protruded on the rear side of the vehicle and requires space, the layout structure has a problem that it is difficult to compact the vehicle.

The present invention is made in view of the situation and an object of the present invention is to provide accessory socket layout structure of a saddle-ride type vehicle where the vehicle can be compacted, providing an accessory socket.

### [Solution to Problem]

The present invention relates to an accessory socket layout structure of a saddle-ride type vehicle comprising the features recited in claim 1. The preferred embodiments of the invention are defined in the remaining dependent claims 2 to 6. To settle the above-mentioned problem, the present invention is based upon accessory socket layout structure of a saddle-ride type vehicle provided with a housing box (22) which is provided under a seat for an occupant (46), which is provided with a front wall (81), a rear wall (85), a pair of left and right side walls (82, 83) and a bottom wall (80) and an upper part of which is closed by the seat (46), a body cover (62) that covers the housing box (22) from the outside in a direction of vehicle width and an accessory socket (130) which is provided with a power supply port (132) and a main body (131) and which is provided to the housing box (22), and has a characteristic that the accessory socket (130) is provided to the side wall (83) of the housing box (22), the main body (131) is provided between the housing box (22) and the body cover (62) and the power supply port (132) is arranged in the housing box (22).

According to the present invention, the main body of the accessory socket can be provided utilizing space between the housing box and the body cover and the vehicle can be compacted, providing the accessory socket.

Besides, the present invention has a characteristic that a body frame (17b) is arranged outside the housing box (22) and inside the body cover (62) and the accessory socket (130) is arranged on the upside of the body frame (17b).

According to the present invention, the accessory socket can be protected from the downside by the body frame.

In addition, the present invention has a characteristic that a step (28) for an occupant and the accessory socket (130) are arranged in positions overlapped in a longitudinal direction and the step (28) for the occupant is arranged outside the accessory socket (130) and the body frame (17b) in the direction of vehicle width.

According to the present invention, the accessory socket can be protected by the step for the occupant.

Further, the present invention has a characteristic that the housing box (22) is provided with a helmet housing part (86) that can house a helmet (H) and the power supply port (132) is arranged in the helmet housing part (86).

According to the present invention, when the helmet is put in and out, an occupant can easily find an accessory and others connected to the power supply port, and the accessory and others can be prevented from being forgotten.

Furthermore, the present invention has a characteristic that a side kickstand (75) is provided on one side in the direction of vehicle width and the accessory socket (130) is arranged on the side wall (83) on the reverse side to the side kickstand (75) in the direction of vehicle width of the housing box (22).

According to the present invention, in parking using the side kickstand, the housing box inclines on the side of an occupant and a position of the side wall of the housing box on the other side on which the accessory socket is provided becomes high. Therefore, the occupant can easily access the accessory socket.

Furthermore, the present invention has a characteristic that the main body (131) is arranged on one side wall (83) of the housing box (22), a canister (112) for evaporated fuel is provided outside the side wall (82) on the reverse side in a lateral direction, an electric harness (110) is arranged outside one side wall (83) and fuel hoses (27b, 113, 118) are arranged outside the side wall (82) on the reverse side.

According to the present invention, space outside each side wall of the housing box is effectively utilized and the vehicle can be compacted. Further, configurations for protecting the electric harness and the fuel hoses can be made common and lightening is enabled.

Further, the present invention has a characteristic that the harness (110) or the hoses is/are passed between the body frame (17b) and the main body (131).

According to the present invention, the harness or the hoses can be guided utilizing the body frame and the main body, the number of parts can be reduced, and lightening is enabled.

### [Advantageous Effects of Invention]

In the accessory socket layout structure according to the present invention, the vehicle can be compacted, providing the accessory socket.

Besides, the accessory socket can be protected from the downside by the body frame.

In addition, the accessory socket can be protected by the step for the occupant.

Further, an accessory and others can be prevented from being forgotten.

Furthermore, the occupant can easily access the accessory socket.

Furthermore, the vehicle can be compacted effectively utilizing the space outside each side wall of the housing box. Further, the configuration for protecting the electric harness and the fuel hose can be made common and the lightening is enabled.

Furthermore, the harness or the hoses can be guided utilizing the body frame and the main body, the number of parts can be reduced, and the lightening is enabled.

### [Brief Description of Drawings]

[Fig. 1] Fig. 1 is a left side view showing a motorcycle provided with accessory socket layout structure equivalent to an embodiment of the present invention;
[Fig. 2] Fig. 2 is a plan showing a housing box viewed from the upside;
[Fig. 3] Fig. 3 is a sectional view taken along line III-III in Fig. 2;
[Fig. 4] Fig. 4 is a perspective view showing the housing box in a state in which a lid is removed;
[Fig. 5] Fig. 5 is a plan showing a reservoir tank housing part viewed from the upside;
[Fig. 6] Fig. 6 is a sectional view taken along line VI-VI in Fig. 5;
[Fig. 7] Fig. 7 is a right side view showing a state in which a reservoir tank is attached;
[Fig. 8] Fig. 8 is a sectional view taken along line VIII-VIII in Fig. 7;
[Fig. 9] Fig. 9 is a perspective view showing a state in which the lid is attached;
[Fig. 10] Fig. 10 is a sectional view taken along line X-X in Fig. 3;
[Fig. 11] Fig. 11 is a sectional view taken along line XI-XI in Fig. 3; and
[Fig. 12] Fig. 12 is a right side view showing the rear of the motorcycle.

### [Description of Embodiments]

Referring to the drawings, one embodiment of the present invention will be described below. In the following description, a longitudinal, lateral or vertical direction shall be the same as a direction in a vehicle body without special description. Besides, a reference sign FR in each drawing denotes the front side of the vehicle body, UP denotes the upside of the vehicle body, and LE denotes the left side of the vehicle body.

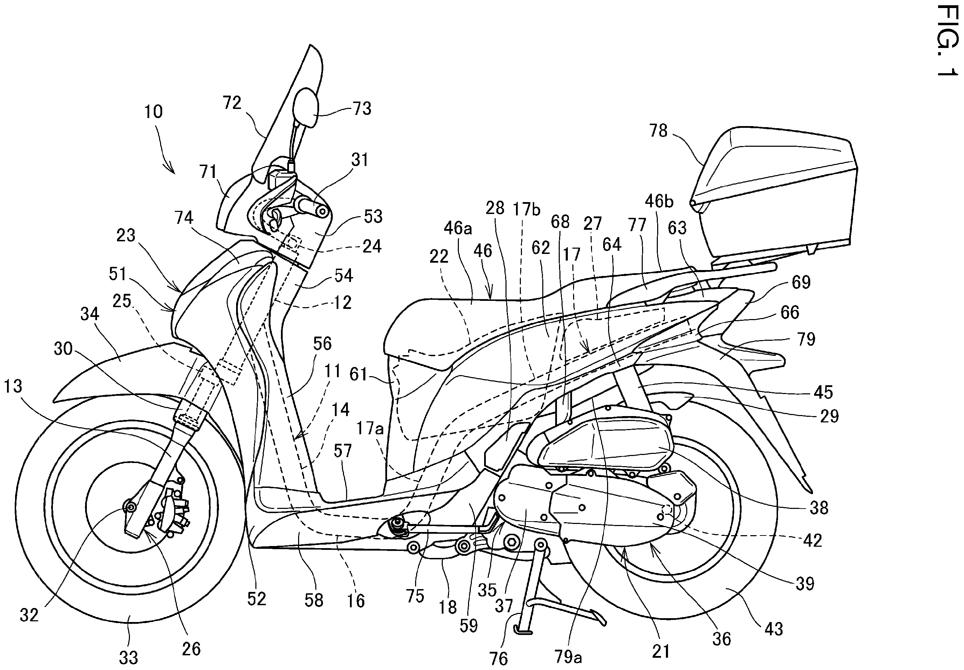

Fig. 1 is a left side view showing a motorcycle 10 provided with accessory socket layout structure equivalent to the embodiment of the present invention.

The motorcycle 10 is a scooter-type saddle-ride type vehicle provided with a low deck floor step 57 for an occupant seated on a seat 46 to put his/her feet, is provided with a front wheel 33 in front of a body frame 11, and a rear wheel 43 which is a driving wheel is journaled to a unit swing type power unit 21 coupled to the rear of the body frame 11.

In the motorcycle 10, a front fork 13 is steerably attached to a head pipe 12 configuring a front end of the body frame 11, the power unit 21 is vertically swingably attached to a rear end of a lower part of a lower frame 16 configuring a low part of the body frame 11 via a link 18, and a housing box 22 is attached to a rear frame 17 configuring the rear of the body frame 11.

The body frame 11 is provided with the head pipe 12, a down frame 14 extended diagonally downward and backward from the head pipe 12, the pair of right and left lower frames 16 (only the lower frame 16 on this side is shown) extended backward after they are laterally extended from a lower end of the down frame 14 and the pair of right and left rear frames 17 (only the rear frame 17 on this side is shown) integrally extended backward and diagonally upward from rear ends of these lower frames 16, and most of the body frame 11 is covered with a body cover 23. Each rear frame 17 is provided with a front part 17a of a rear frame extended backward with its rear higher under the seat 46 and a rear frame rear part 17b extended with its rear higher at a gentler inclination than the front part 17a of the rear frame.

The front fork 13 is configured by a steering stem 24 rotatably supported by the head pipe 12, a bottom bridge 25 attached to a lower end of the steering stem 24 and buffer parts 26 (only the buffer part 26 on this side is shown) attached to right and left both ends of the bottom bridge 25. A handlebar 31 is attached to an upper end of the steering stem 24 and the front wheel 33 is supported by lower ends of the right and left buffer parts 26 via an axle 32. The front wheel 33 is covered with a front fender 34 attached to the front fork 13 from the upside and a pair of right and left fork guards 30 (only the fork guard 30 on this side is shown) that protect the front fork 13 is attached to the front fender 34.

The power unit 21 is configured by an engine 35 that forms its front and a continuously variable transmission 36 integrally provided to the rear of the engine 35. In the engine 35, a cylinder body provided with a cylinder head, a cylinder block and others is substantially forward extended from a crankcase 37 and an intake device including an air cleaner 38 is connected to the cylinder head. The continuously variable transmission 36 is provided with a transmission case 39 integrated with a rear end of the crankcase 37 and the rear wheel 43 is attached to a rear end of the transmission case 39 via an output shaft 42. A rear cushion unit 45 is laid between one rear frame 17 and the transmission case 39.

The seat 46 is attached on the upside of the housing box 22 so that the seat can be opened/closed. A fuel tank 27 is provided at the back of the housing box 22.

The body cover 23 is provided with a front cover 51 that covers the front of an upper part of the front fork 13, a pair of right and left front lower covers 52 (only the front lower cover 52 on this side is shown) continuously provided to a lower end of the front cover 51, a handlebar cover 53 that covers the center of the handlebar 31, a front inner cover 54 that covers the rear of the upper part of the front fork 13, a leg shield 56 which covers the rear of the upper part of the front fork 13, which is connected to right and left ends of the front cover 51 and which covers the front sides of the legs of a rider (occupant), the floor step 57 which is extended downward and backward from a lower end of the leg shield 56 and which functions as a footrest for the rider, a pair of right and left floor side skirts 58 (only the floor side skirt 58 on this side is shown) extended downward from right and left edges of the floor step 57 and a pair of right and left rear side skirts 59 (only the rear side skirt 59 on this side is shown) continuously provided to rear ends of these floor side skirts 58.

Further, the body cover 23 is provided with a center cover 61 extended from a rear end of the floor step 57 to the downside of a front end of the seat 46, a pair of right and left body side covers 62 (only the body side cover 62 on this side is shown) extended from the floor step 57 and the center cover 61 to the rear of the vehicle body through the downside of a side edge of the seat 46, a rear center cover 63 that covers the rear ends of the right and left body side covers 62 at the back of the seat 46, a pair of right and left body lower covers 64 (only the body lower cover 64 on this side is shown) extended backward from the rear end of the floor step 57 along lower edges of the right and left body side covers 62 and a pair of right and left rear side covers 66 (only the rear side cover 66 on this side is shown) connected to lower edges of the rear ends of the body side covers 62.

The housing box 22 is covered with the center cover 61 from the front side and is covered with the front parts of the right and left body side covers 62 from the sides. The fuel tank 27 is covered with the rear parts of the right and left body side covers 62 from the sides.

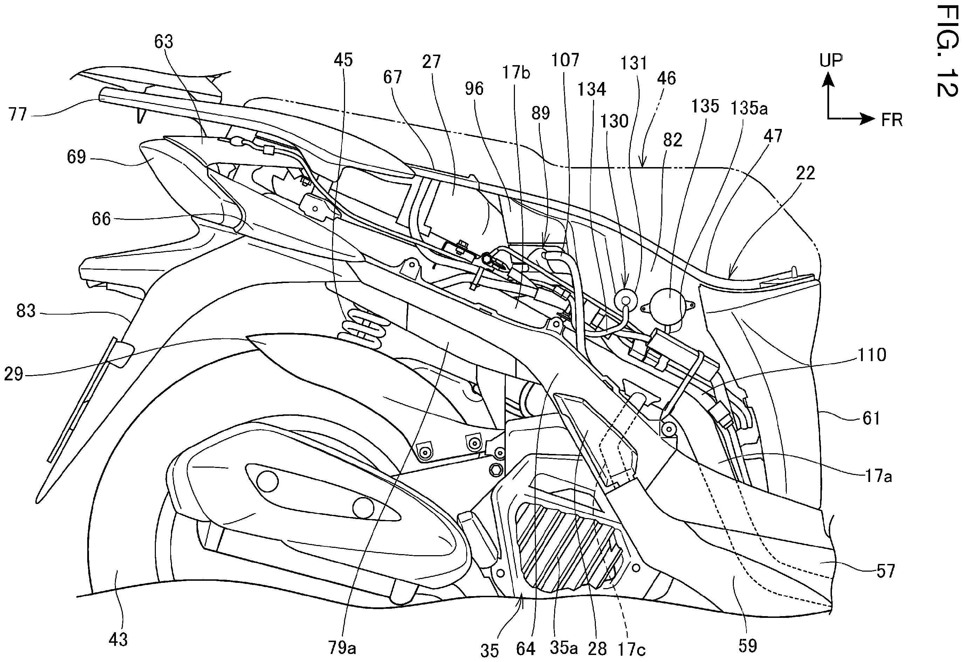

The seat 46 is integrally provided with a front seat 46a for the rider to be seated and a rear seat 46b for a pillion passenger formed to be higher than the front seat 46a by one step. A folding type step 28 for an occupant for the pillion passenger seated on the rear seat 46b to put his/her foot is provided to a lower end of each body lower cover 64. The step 28 for the occupant is provided on both sides as a pair and is supported by a subframe 17c (see Fig. 12) extended from the front of the rear frame 17. Besides, the front of the rear wheel 43 is covered with a front side rear fender 29 from the upside.

A headlight 71 at the front, a windshield 72 in an upper part and a pair of right and left rearview mirrors 73 (only the rearview mirror 73 on this side is shown) at right and left ends are provided to the handlebar cover 53. A folding type side kickstand 75 is provided to the left lower frame 16 and a main stand 76 is provided on the downside of the crankcase 37.

A blinker 74 is integrated with the front cover 51. A grab rail 77 for the pillion passenger to grab is provided at the back of the seat 46 and a luggage box 78 is attached to the rear of the grab rail 77. The rear wheel 43 is covered with a rear fender 79 from the upside and a license plate is provided to the rear fender 79. A tail lamp 69 is provided at the back of the rear side cover 66.

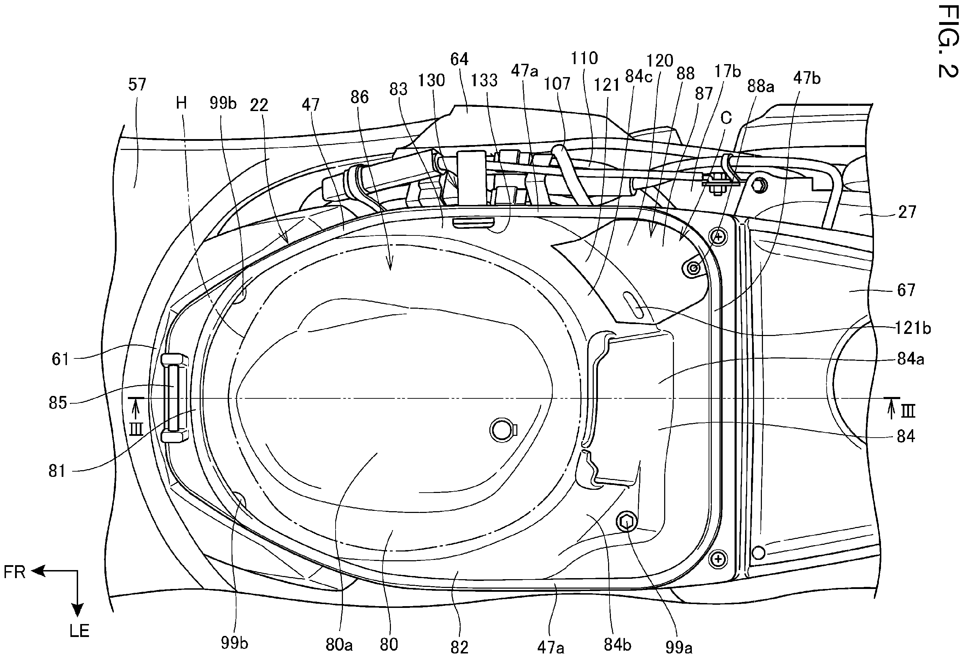

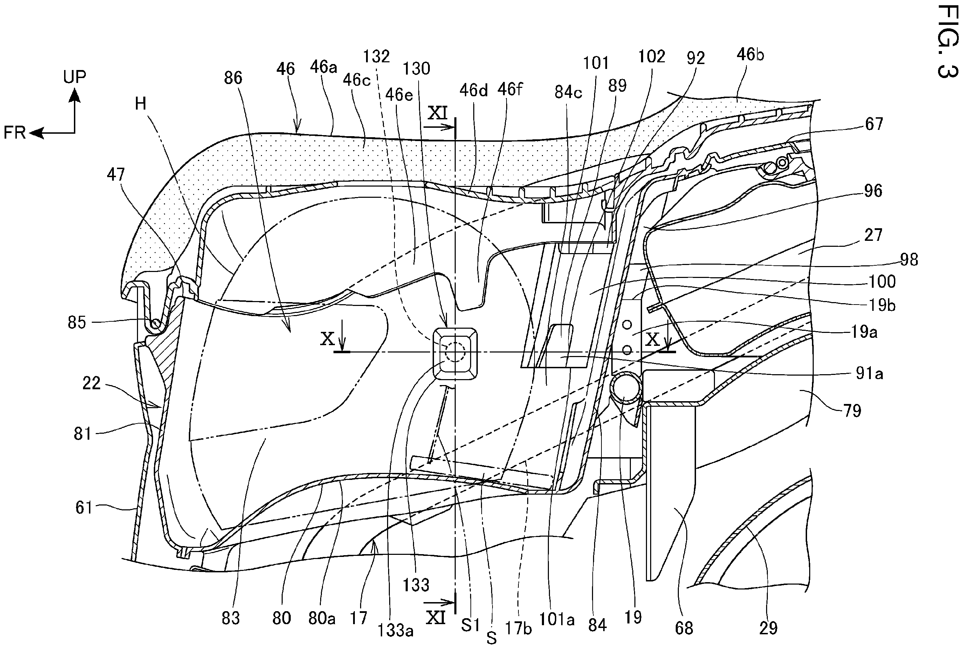

Fig. 2 is a plan in which the housing box 22 is viewed from the upside. Fig. 3 is a sectional view taken along line III-III in Fig. 2. In Fig. 2, a state in which the seat 46 and the body side cover 62 are removed is shown. Besides, in Fig. 3, a state in which a lid 88 described later is removed is shown.

As shown in Figs. 2 and 3, the housing box 22 is formed substantially in the shape of a box a top face of which is open and is provided with a bottom wall part 80 located over a cylinder head (not shown) of the engine 35 (see Fig. 1), a front wall part 81 stood from a front edge of the bottom wall part 80, a side wall part 82 stood from a side edge on the left side (on the other side) in a direction of vehicle width of the bottom wall part 80, a side wall part 83 stood from a side edge on the right side (on one side) in the direction of vehicle width of the bottom wall part 80 and a rear wall part 84 stood from a rear edge of the bottom wall part 80. As for the bottom wall part 80, the front is lower than the rear and the housing box 22 is the deepest in the front. A curved part 80a overhanging in a curved shape upward is formed in the middle in a longitudinal direction of the bottom wall part 80. An upper edge part 47 of the housing box 22 that supports the seat 46 is inclined so that the front is lower than the rear.

The seat 46 is journaled to a hinge part 85 provided to an upper part of the front wall part 81 of the housing box 22 and is vertically opened/closed with the hinge part 85 as the center. The seat 46 is provided with a cushion part 46c and a seat bottom plate 46d which supports the cushion part 46c and which is supported by the upper edge part 47, and a guide plate 46e extended downward in the housing box 22 along the side wall parts 82, 83 is formed at right and left edges of the rear of the seat bottom plate 46d. An extended part 46f extended downward is formed in the middle in a longitudinal direction of the guide plate 46e.

The rear part 17b of the rear frame is extended backward and upward through the lateral side of a lower part of the rear of each side wall part 82, 83 and the rear parts 17b of the right and left rear frames at the back of the rear wall part 84 are coupled by a cross member 19 extended in the direction of vehicle width. The cross member 19 is a part of the body frame 11. A dual purpose stay 19a that supports the rear of the housing box 22 is planted upward on the cross member 19.

A tank cover 67 that covers the fuel tank 27 from the upside is coupled to a rear edge of the upper edge part 47 of the housing box 22. The fuel tank 27 is supported by the rear parts 17b of the right and left rear frames and is located in space between the tank cover 67 and the front of the rear fender 79. A splash guard 68 which is extended downward and which covers a lower part of the rear wall part 84 from the rear side is provided to the front of the rear fender 79.

As for the housing box 22, the width of the front is formed to be narrower because distance between the side wall parts 82, 83 is made shorter on the front side in a top view. The rear of an upper edge part 47a of each side wall part 82, 83 is extended substantially straight in the longitudinal direction and connects with an upper edge part 47b of the rear wall part 84 which is substantially perpendicular to the upper edge part 47a.

The housing box 22 is provided with a housing part 86 large enough to house a full-face helmet H and the rear wall part 84 that covers the helmet H from the rear side is formed in a curved shape projecting on the rear side in accordance with a curved shape of the rear of the helmet H. Besides, the rear wall part 84 is slightly inclined backward and in the rear of the housing part 86, internal space is made larger on the upside.

Detailedly, the rear wall part 84 is provided with a central wall part 84a that covers the center of the rear of the helmet H from the rear side in the center in a direction of the width of the housing part 86, curved wall parts 84b, 84c that have a curved shape and cover the right and left sides of the rear of the helmet H in a position apart from the upper edge part 47b forward and an upper wall part 87 that couples an upper edge of the right curved wall part 84c and the upper edge parts 47a, 47b. The upper wall part 87 is located in a lower position by one step than a top face of the upper edge part 47b and is inclined with the front slightly lower.

As shown in Fig. 2, a part of the right curved wall part 84c and a part of the upper wall part 87 are configured by the lid 88 separate from the housing box 22.

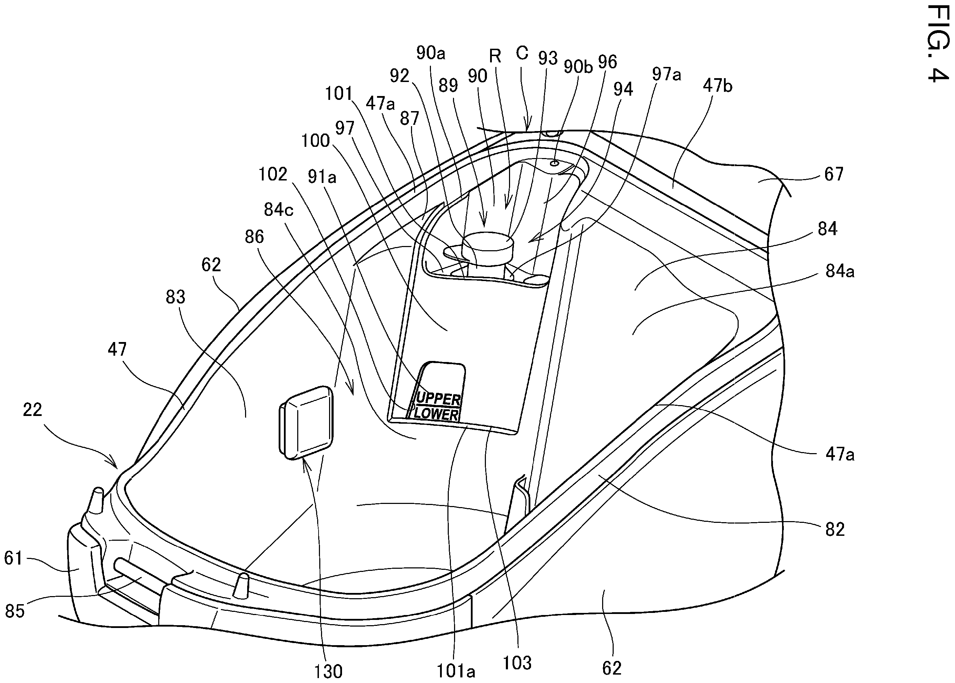

Fig. 4 is a perspective view showing the housing box 22 in a state in which the lid 88 is removed.

As shown in Figs. 2 to 4, as the curved wall part 84c is formed in front of the upper edge part 47b in the housing box 22, space in which a part can be arranged is formed under the upper wall part 87 and at the back of the curved wall part 84c. That is, the space is formed at a right corner part C of the rear of the housing box 22 and in this embodiment, the space is utilized for a reservoir tank housing part R in which a reservoir tank 89 that reserves cooling water of the engine 35 is arranged.

The upper wall part 87 of the housing box 22 is provided with an opening part 90 open on the upside of the reservoir tank housing part R and the opening part 90 is closed by the lid 88. When the lid 88 is removed, the reservoir tank housing part R is exposed.

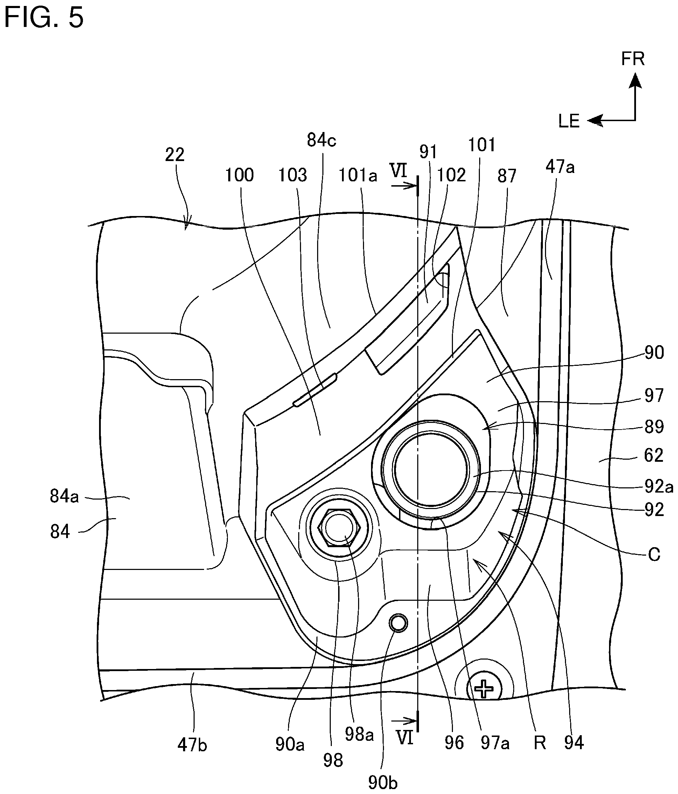

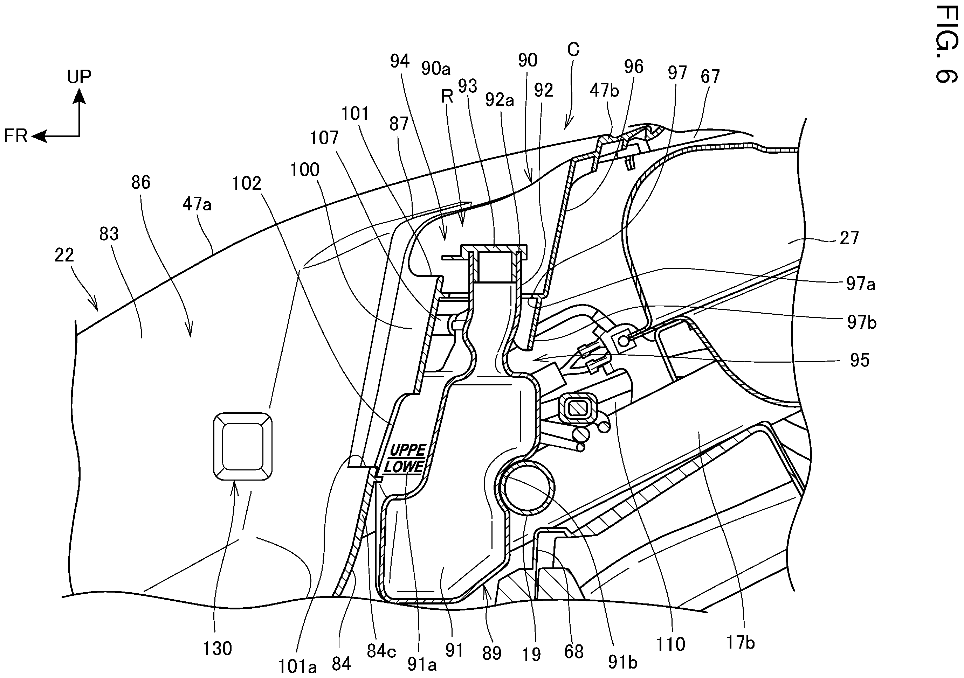

Fig. 5 is a plan in which the reservoir tank housing part R is viewed from the upside. Fig. 6 is a sectional view taken along line VI-VI in Fig. 5.

As shown in Figs. 4 to 6, the reservoir tank 89 is provided with a tank main body 91 extended along a rear face of the curved wall part 84c, a feed water cylinder part 92 extended upward from an upper part of the tank main body 91 and a cap 93 (not shown in Fig. 5) that closes a feed water inlet 92a at an upper end of the feed water cylinder part 92. A level display part 91a showing an upper limit and a low limit respectively of a cooling water level is provided to a front face of the tank main body 91. The reservoir tank 89 is made of translucent resin and the water level is visible from the outside. A recess part 91b hollowed on the front side is formed in the vertical middle in the rear of the tank main body 91 and the reservoir tank 89 is supported by the cross member 19 because the recess part 91b is fitted to a front half of the cross member 19.

The reservoir tank housing part R is provided with a feed water part 94 in which the feed water inlet 92a is housed and a main body housing part 95 which is located under the feed water part 94 and in which a lower part of the feed water cylinder part 92 and the tank main body 91 are arranged.

The feed water part 94 is provided with a feed water part side wall 96 that covers an upper part of the feed water cylinder part 92 from the right side and from the rear side and a feed water part bottom wall 97 which the feed water cylinder part 92 pierces and is partitioned by the feed water part side wall 96, the feed water part bottom wall 97 and the lid 88. The feed water part side wall 96 is a wall extended downward from a periphery of the opening part 90 to the vicinity of the upper part of the tank main body 91. A receiver part 90a with the periphery of the opening hollowed by the thickness of the lid 88 is formed in the periphery of the opening part 90 and receives an upper part of the lid 88.

The feed water part bottom wall 97 is provided with a through hole 97a having a larger diameter than that of the feed water cylinder part 92, the feed water cylinder part 92 is arranged in the feed water part 94 through the through hole 97a from the downside, and the feed water inlet 92a is located in the middle of the height of the feed water part 94.

A fastening part 98 that fixes the housing box 22 to the body frame 11 is provided to the feed water part bottom wall 97 in a position inside the through hole 97a in the direction of vehicle width. The fastening part 98 is formed in the shape of a cylinder overhanging downward from the feed water part bottom wall 97 and is fastened to a top face 19b (see Fig. 3) of the dual purpose stay 19a by a bolt 98a inserted into a bottom of the cylindrical fastening part 98. Besides, the housing box 22 is also fastened to the body frame 11 by a fastening part 99a (see Fig. 2) provided to the vicinity of the left side wall part 82 in the rear of the housing box 22 and a fastening part 99b (see Fig. 2) provided at right and left corners at a front end of the housing part 86.

A fixing hole 90b with which a lid fixing bolt 88a (see Fig. 2) for fixing the lid 88 to the housing box 22 is engaged is formed in the rear of the receiver part 90a.

The rear of the tank main body 91 housed in the main body housing part 95 is exposed outside the housing box 22; however, the rear of the tank main body 91 is covered with the fuel tank 27 and the rear fender 79. A wall 97b which is extended downward and which covers the feed water cylinder part 92 from the rear side is formed in the rear of the feed water part bottom wall 97.

A substantially rectangular partition wall 100 acquired by hollowing a part of the curved wall part 84c on the side of the reservoir tank housing part R by one step is formed in a part from a vertical middle to an upper end of the curved wall part 84c, and the reservoir tank housing part R and the housing part 86 are partitioned by the partition wall 100. A protruded wall part 101 protruded on the upside of a front edge of the feed water part bottom wall 97 is formed at an upper edge of the partition wall 100. An upper end of the protruded wall part 101 is located on the downside of the feed water inlet 92a. In a state in which the lid 88 is removed, the feed water part 94 and the housing part 86 are partitioned by the protruded wall part 101.

A window part 102 for a check that communicates with the main body housing part 95 is formed in a lower part of the partition wall 100 and exposes the level display part 91a of the reservoir tank 89 on the side of the housing part 86. A position of a lower edge of the partition wall 100 is substantially coincident with a position of the level display part 91a.

An engaging hole 103 in the shape of a slit is formed in a position inside the window part 102 for a check in the direction of vehicle width in a stepped part at a lower edge 101a of the partition wall 100.

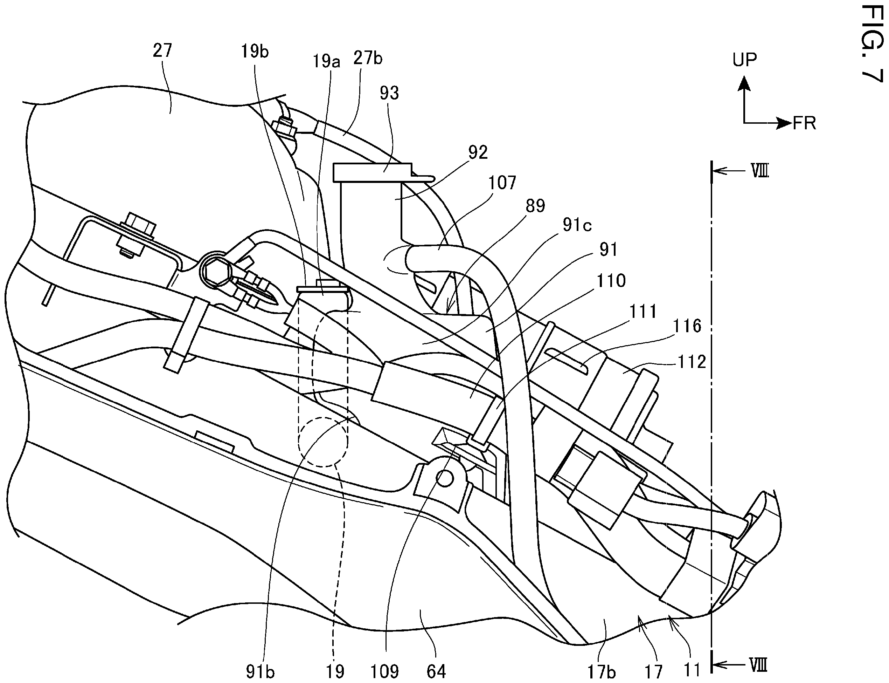

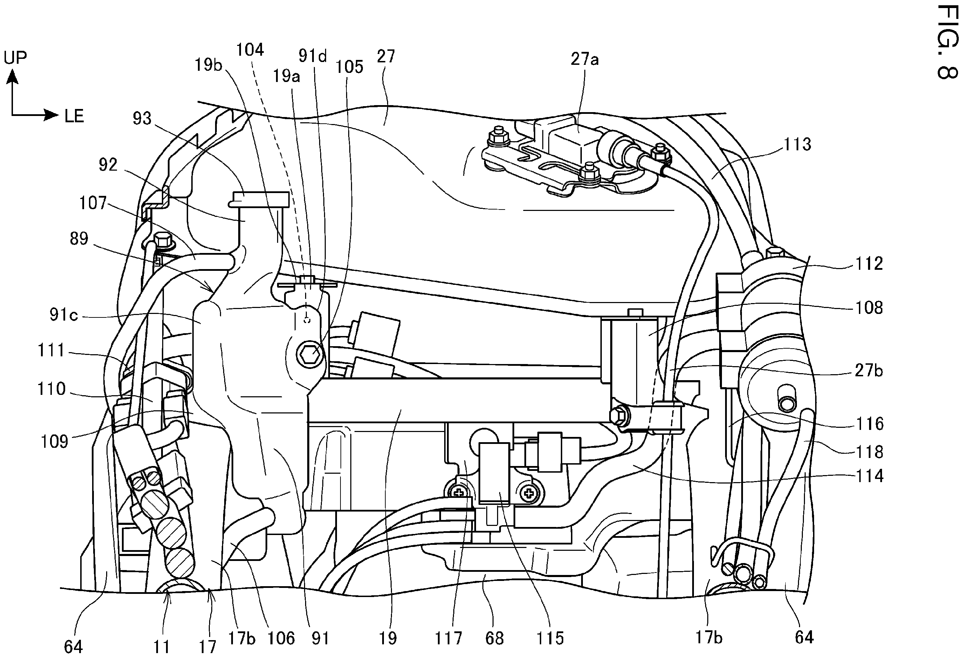

Fig. 7 is a right side view showing a state in which the reservoir tank 89 is attached. Fig. 8 is a sectional view taken along line VIII-VIII in Fig. 7. In Figs. 7 and 8, a state in which the housing box 22 and a part of the body cover 23 are removed is shown.

As shown in Figs. 6 to 8, the reservoir tank 89 is arranged in a corner of the body frame 11 in which the cross member 19 is substantially perpendicularly connected to the rear part 17b of the right rear frame extended in the longitudinal direction and is located between the curved wall part 84c and the cross member 19. The tank main body 91 is formed to be vertically long, its lower part is overlapped with the rear part 17b of the rear frame in a side view, and its upper part overhangs on the upside of the rear part 17b of the rear frame. Besides, the tank main body 91 is provided with a side overhanging part 91c that overhangs on the upside of a top face of the rear part 17b of the rear frame.

The tank main body 91 is provided with a stay on the tank side part 91d protruded inside in the direction of vehicle width in an upper part of an inner face and a protrusion 104 protruded backward on the side of the dual purpose stay 19a to which the housing box 22 is fixed is formed in an upper part of the stay on the tank side part 91d. The dual purpose stay 19a is provided at the back of the tank main body 91 apart from the rear part 17b of the right rear frame inside in the direction of vehicle width and is provided with a positioning hole (not shown) into which the protrusion 104 is fitted and a fixing hole (not shown) to which a bolt 105 inserted into the stay on the tank side part 91d is fastened on the front. The reservoir tank 89 is fixed to the dual purpose stay 19a by fitting the protrusion 104 of the stay on the tank side part 91d into the positioning hole, fitting the recess part 91b (see Fig. 6) to the cross member 19 and fastening the bolt 105. As described above, as the dual purpose stay 19a functions as stays for the housing box 22 and the reservoir tank 89, the number of parts can be reduced.

A housing box stay 108 extended upward is provided to an end of the cross member 19 on the reverse side of the dual purpose stay 19a. The fastening part 99a (see Fig. 2) of the housing box 22 is fastened to a top face of the housing box stay 108.

A tube 106 connected to a radiator 35a (see Fig. 12) of the engine 35 is connected to a lower end of the tank main body 91 and cooling water gets and returns between the radiator 35a and the tank main body 91 through the tube 106. The radiator 35a is arranged on the downside of the rear part 17b of the right rear frame on the right side of the engine 35 and is arranged on the right side of the vehicle body like the reservoir tank 89. Therefore, the reservoir tank 89 and the radiator 35a are located closely and the tube 106 can be reduced.

The feed water cylinder part 92 is extended on the upside of the dual purpose stay 19a and an overflow tube 107 is provided to a part under the feed water part bottom wall 97 on an outside face of the feed water cylinder part 92.

A tabular harness fixing part 109 (see Fig. 7) extended outside in the direction of vehicle width on the upside of the rear part 17b of the right rear frame is formed in the front of an outside face of the side overhanging part 91c of the tank main body 91. A battery (not shown) of the motorcycle 10 is arranged in front of the head pipe 12, and a harness 110 extended from the battery and connected to electric equipment such as the tail lamp 69 is extended backward in the vehicle body along the body frame 11, is supported by a top face of the harness fixing part 109 in the vicinity of the rear part 17b of the rear frame, and is fixed to the harness fixing part 109 by a band 111 inserted into the harness fixing part 109.

A cylindrical canister 112 (see Fig. 8) is supported by the rear part 17b of the left rear frame on the reverse side to the side on which the reservoir tank 89 is provided. The canister 112 is a main part of an evaporated fuel processor that temporarily stores evaporated fuel in the fuel tank 27 and supplies it to the engine 35 to combust it there and is provided with a charge pipe 113 connected to the fuel tank 27, a purge pipe 114 that connects the canister 112 to an intake system of the engine 35 and a drain pipe 118 that exhausts water and fuel that gets liquid. A control valve 115 that controls timing at which evaporated fuel is fed on the side of the engine 35 is provided on the way of the purge pipe 114.

A stay 116 for a canister extended upward is provided to the rear part 17b of the left rear frame, the canister 112 is supported by the stay 116 for a canister in posture that an axis line of the canister is along an axis line of the rear part 17b of the rear frame and the canister is located outside the left side wall part 82 and inside the body side cover 62.

A supporting plate 117 extended downward is provided to the center of the cross member 19 in the direction of vehicle width and the control valve 115 is supported by the supporting plate 117.

Besides, the fuel tank 27 is provided with a fuel pump 27a on the side of the canister 112 on a top face of the front, a fuel supply tube 27b connected to a discharge port of the fuel pump 27a is extended downward through the inside of the rear part 17b of the rear frame that supports the canister 112, and the fuel supply tube is connected to the side of the engine 35.

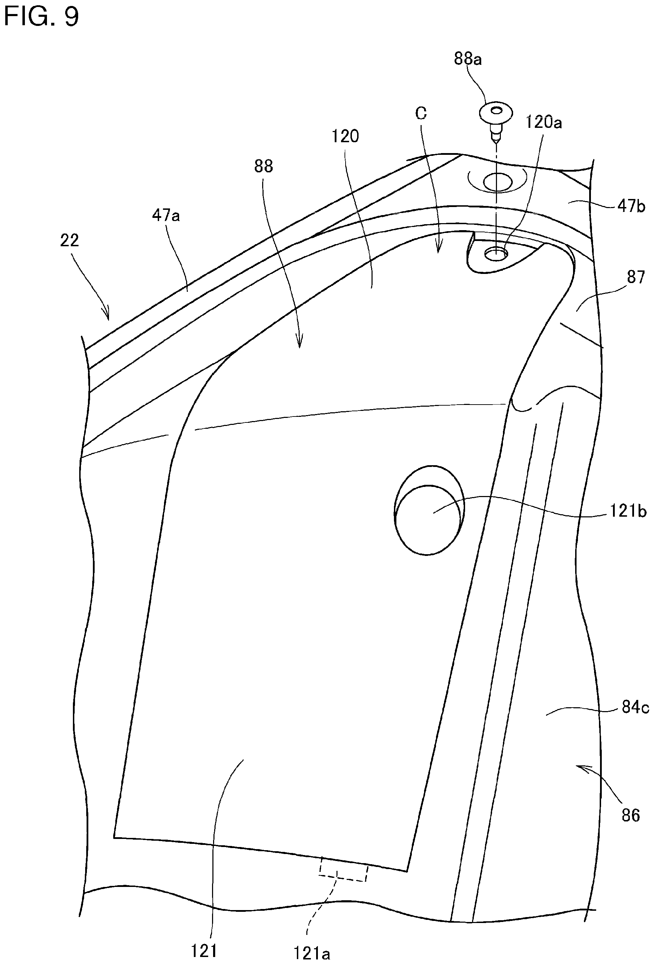

Fig. 9 is a perspective view showing a state in which the lid 88 is attached.

As shown in Figs. 2, 4 and 9, the lid 88 is integrally provided with an upper wall 120 that configures most of the upper wall part 87 of the housing box 22 and a side wall 121 which is extended downward from a front edge of the upper wall 120 and which covers the partition wall 100 from the front side and is formed in a substantially L shape.

The upper wall 120 closes the opening part 90 by fitting the upper wall to the receiver part 90a (see Fig. 5) of the upper wall part 87 and a top face of the upper wall part 87 is substantially flush. A fixing hole 120a into which the lid fixing bolt 88a is inserted is formed at a rear end of the upper wall 120.

The side wall 121 is provided with an engaging piece 121a engaged with the engaging hole 103 on a lower edge side of the partition wall 100 at its lower edge. The side wall 121 is fitted into a recess formed by hollowing the partition wall 100 backward and is positioned by engaging the engaging piece 121a with the engaging hole 103. The side wall 121 covers the whole partition wall 100 including the window part 102 for a check, is substantially flush with the curved wall part 84c around the side wall, and configures a part of an inner wall of the housing part 86.

Referring to Fig. 6, the partition wall 100 is hollowed backward more greatly than the thickness of the side wall 121 and space is formed between the side wall 121 and the partition wall 100. A recess part 121b (see Fig. 9) hollowed on the side of the partition wall 100 is formed in an upper part of the side wall 121. The recess part 121b has size in which a finger of a workman can be inserted, the workman can grasp the lid 88 utilizing the recess part 121b, and the workman can easily remove and mount the lid 88.

In the maintenance of the reservoir tank 89, the workman first opens the seat 46 to expose the housing part 86, detaches the lid fixing bolt 88a, grasps the lid 88 via the recess part 121b, and removes the lid 88 by pulling up it. Hereby, the feed water part 94 and the partition wall 100 are exposed, in this state, the workman can view the level display part 91a from the window part 102 for a check, can verify the volume of cooling water, removes the cap 93 located in the feed water part 94, accesses the feed water inlet 92a, and can refill cooling water from the feed water inlet 92a. As cooling water can be refilled from the feed water inlet 92a provided in a position close to the upper edge part 47 of the housing box 22 in the upper part of the housing box 22 as described above, feed water work is enabled utilizing the large space on the upside of the housing box 22 and the workability is satisfactory. Besides, as the curved wall part 84c and the partition wall 100 are inclined backward, the window part 102 for a check can be easily viewed from the upside.

In addition, as the feed water inlet 92a is provided in the corner part C of the housing box 22 at the back of the curved wall part 84c formed in accordance with a shape of the helmet H, the reservoir tank 89 can be arranged effectively utilizing the dead space in the corner part C, securing the capacity of the housing part 86.

When cooling water is spilled in the feed water part 94 in feed water work, the cooling water on the feed water part bottom wall 97 is exhausted downward outside the housing box 22 through the through hole 97a, is obstructed by the protruded wall part 101, and is prevented from flowing into the housing part 86.

Besides, as the feed water part bottom wall 97 is provided to the feed water part 94, the feed water cylinder part 92 is inserted into the through hole 97a of the feed water part bottom wall 97 and the feed water inlet 92a is provided in the feed water part 94, the invasion of dust and water outside the housing box 22 into the feed water part 94 can be inhibited by the feed water part bottom wall 97. As the tank main body 91 having a larger diameter than a diameter of the through hole 97a is located on the downside of the through hole 97a, dust and others are difficult to invade into the feed water part 94 through the through hole 97a. As described above, as the invasion of dust and others into the feed water part 94 is inhibited, dust and others in the feed water part 94 are inhibited from invading into the housing part 86. Therefore, a seal member for sealing the feed water part 94 is not required to be provided to the upper wall 120 of the lid 88 and the number of parts can be reduced.

In addition, as the window part 102 for a check is a small opening corresponding to the size of the level display part 91a and is covered with the tank main body 91 from the rear side, dust and others are inhibited from invading inside the partition wall 100 through the window part 102 for a check. Therefore, a seal member for sealing the partition wall 100 is not required to be provided to the side wall 121 of the lid 88 and the number of parts can be reduced.

Referring to Figs. 5 and 9, as the fastening part 98 and the bolt 98a are provided to the feed water part 94, the fastening part 98 and the bolt 98a are covered with the lid 88. As described above, as the relatively large bolt 98a for fixing the housing box 22 can be covered, the appearance quality is satisfactory.

Further, as the fastening part 98 is provided to the feed water part bottom wall 97 located in the lower part of the feed water part 94, the height of the dual purpose stay 19a that receives the fastening part 98 can be lowered, and the enhancement of rigidity and lightening can be realized.

Next, the arrangement structure of a power supply socket for power supply will be described.

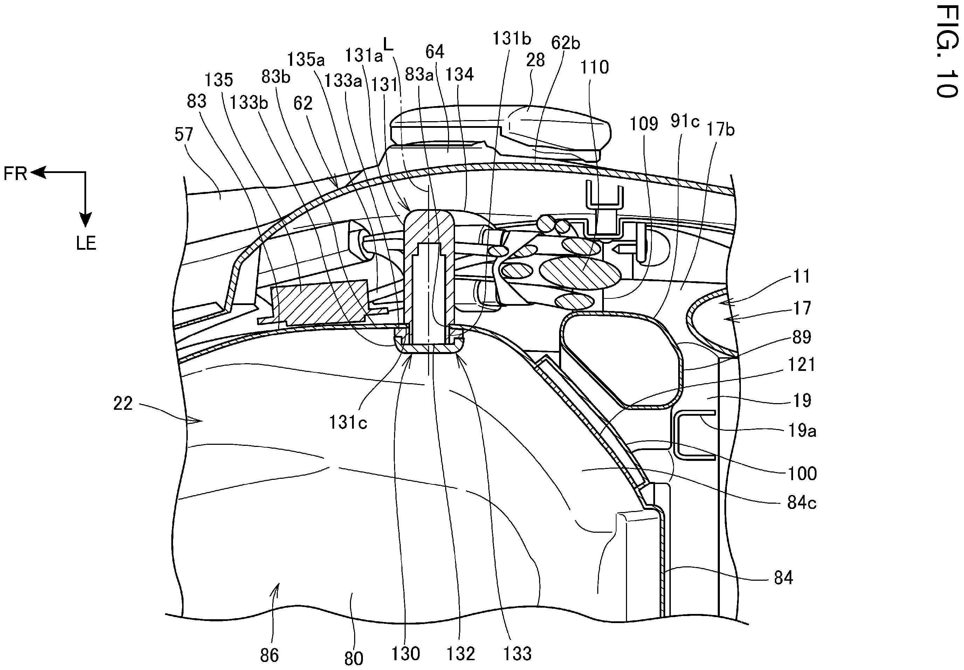

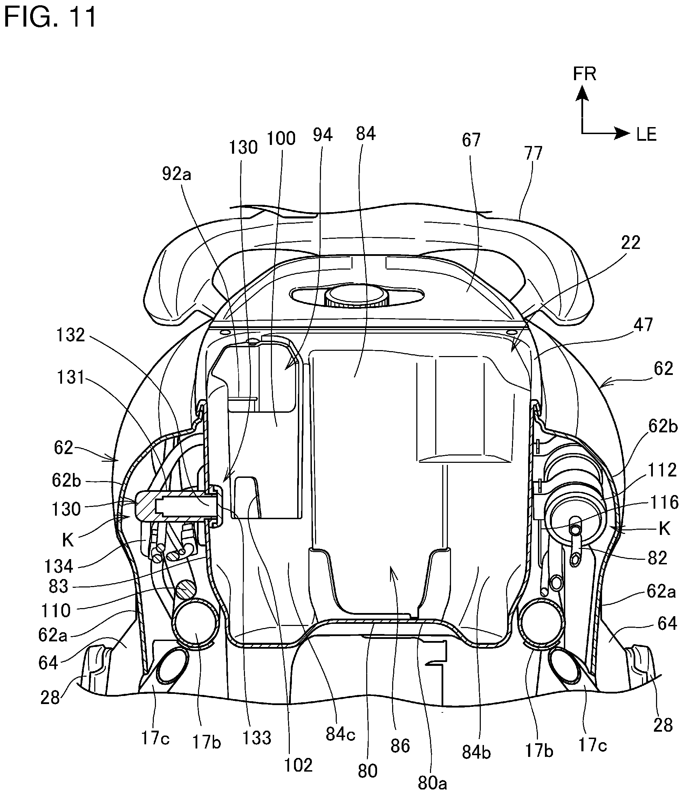

Fig. 10 is a sectional view taken along line X-X in Fig. 3. Fig. 11 is a sectional view taken along line XI-XI in Fig. 3.

As shown in Figs. 3, 10 and 11, the power supply socket 130 (an accessory socket) that can supply power to separate equipment (an accessory) from the motorcycle 10 is provided to the housing box 22. In this embodiment, a case that power is supplied to a tabular mobile information terminal S for the separate equipment will be described for an example below. In this case, the mobile information terminal S means mobile electronic equipment such as a cellular phone, a smartphone, a mobile navigation-communication system and a personal digital assistant (PDA).

The power supply socket 130 is provided with a cylindrical main body 131, a power supply port 132 formed at one end of the main body 131, an openable lid part 133 that closes the power supply port 132 and a connecting cord 134 pulled out from the side of the other end of the main body 131. The connecting cord 134 is connected to wiring branched from the harness 110 and is connected to the battery.

As shown in Fig. 10, the main body 131 is provided with a major-diameter part 131a arranged outside the housing box 22 and a minor-diameter part 131b in which an end on the side of the power supply port 132 is formed to have a smaller diameter by one step and a stepped part 131c is formed in a boundary between the major-diameter part 131a and the minor-diameter part 131b.

The lid part 133 is provided with a base part 133a engaged with the periphery of the minor-diameter part 131b and a lid part 133b supported by the base part 133a.

A hole part 83a for the socket that supports the power supply socket 130 is formed in the right side wall part 83 of the housing box 22.

The power supply socket 130 is fixed to the minor-diameter part 131b inserted into the hole part 83a for the socket from the outside of the housing box 22 by engaging the base part 133a in the housing box 22. Detailedly, the power supply socket 130 is fixed by the stepped part 131c and the base part 133a with the side wall part 83 between them.

In a state in which the helmet H is not housed, the mobile information terminal S is placed on the bottom wall part 80 of the housing box 22, a connecting terminal (not shown) of a power supply cord S1 connected to the mobile information terminal S is extended upward, and the connecting terminal is inserted into the main body 131 from the power supply port 132.

As shown in Fig. 10, the side wall part 83 of the housing box 22 is provided with a flat wall part 83b extended substantially straight in the longitudinal direction along the rear part 17b of the rear frame in front of the curved wall part 84c and substantially vertically and the power supply socket 130 is provided to the flat wall part 83b. Therefore, the power supply socket 130 is arranged in posture in which an axis line L is substantially straight in the direction of vehicle width and substantially horizontal. Therefore, the power supply socket 130 can be compactly arranged.

The power supply socket 130 is arranged closer to the rear wall part 84 than the front wall part 81 in the longitudinal direction and is located in front of the curved wall part 84c in the rear of the housing part 86. Besides, the power supply socket 130 is located on the lateral side of the rear of the helmet H in a state in which the helmet H is housed.

As for a vertical direction, the power supply socket 130 is provided on the slight downside of the middle in the vertical direction of the housing box 22 and is located on the downside of the extended part 46f of the guide plate 46e.

In this embodiment, as the power supply socket 130 is arranged in front of the curved wall part 84c in the rear of the housing part 86 and in the middle in the vertical direction apart from the bottom wall part 80, the insertion of the connecting terminal (not shown) of the power supply cord S1 into the power supply port 132 is not obstructed by the curved wall part 84c and the bottom wall part 80 and the connecting terminal can be easily connected. Besides, as the power supply socket 130 is located in the middle in the vertical direction of the housing box 22, the short power supply cord S1 can be also used.

In addition, the rider (occupant) of the motorcycle 10 gets off on the left side of the vehicle body to keep the side kickstand 75 (see Fig. 1) upright arranged on the left side of the vehicle body; however, in this embodiment, as the power supply socket 130 is provided to the right side wall part 83 on the reverse side to the side kickstand 75, the power supply socket 130 is opposite to the rider when the seat 46 is opened. Therefore, the power supply socket 130 is visible well from the rider and the rider can easily connect the connecting terminal. Further, in parking using the side kickstand 75, as the vehicle body is inclined leftward, a position of the power supply socket 130 accordingly becomes high and the power supply socket is brought close to the rider, connection work and others are easy. Furthermore, when the rider leaves the motorcycle 10, the helmet H is housed in the housing part 86; however, as the housing of the helmet is obstructed by the mobile information terminal S in a state in which the mobile information terminal S is connected to the power supply socket 130, the existence of the mobile information terminal S can be informed the rider. Therefore, the detachment of the mobile information terminal S can be prevented from being forgotten.

Fig. 12 is a right side view showing the rear of the motorcycle 10. In Fig. 12, a state in which the body side cover 62 is removed is shown.

Referring to Figs. 10 to 12, each body side cover 62 is provided with a frame side part 62a that covers the rear part 17b of the rear frame from the outside and a box side part 62b that overhangs outside the frame side part 62a in the direction of vehicle width and covers the housing box 22 from the outside.

Space K is respectively formed over each rear part 17b of the rear frame between the right box side part 62b and the right side wall part 83 and between the left box side part 62b and the left side wall part 82. In the left space K, the canister 112 is housed. In the right space K, plural pieces of electric harness including the harness 110 are wired and the power supply socket 130 is housed. As described above, the power supply socket 130 can be compactly arranged utilizing the space by providing the power supply socket 130 in the space K between the outside of the housing box 22 and the body side cover 62.

The main body 131 of the power supply socket 130 is extended in the direction of vehicle width over the rear part 17b of the rear frame in the right space K and is protruded outside an outside face of the rear part 17b of the rear frame. Besides, a speaker 135 (see Fig. 12) of an alarm unit for preventing theft is attached to an outside face of the side wall part 83 next to the main body 131 and in front of the main body 131. The speaker 135 is provided with a coupling cable 135a.

The plural pieces of electric harness including the harness 110 and the coupling cable 135a are wired on the downside of the main body 131 along the rear part 17b of the rear frame and the upward displacement is regulated by the main body 131. As described above, as the electric harness is guided by the main body 131 of the power supply socket 130, a dedicated guide is not required to be provided and the number of parts can be reduced.

The step 28 for the occupant (see Fig. 12) is located on the downside of the power supply socket 130 and is arranged in a position overlapped with the main body 131 in the longitudinal direction. The step 28 for the occupant is supported by the subframe 17c extended outside the rear part 17b of the rear frame in the direction of vehicle width and is located outside the power supply socket 130 in the direction of vehicle width. Hereby, as external force acts on the step 28 for the occupant and the subframe 17c prior to the body side cover 62 when the external force acts on a circumference of the step 28 for the occupant from the side, the power supply socket 130 and the speaker 135 inside the body side cover 62 can be protected.

As shown in Figs. 8 and 11, in this embodiment, the canister 112 and fuel hoses such as the charge pipe 113, the purge pipe 114, the drain pipe 118 and the fuel supply tube 27b are arranged along the rear part 17b of the left rear frame, the plural pieces of electric harness including the harness 110 and the coupling cable 135a are arranged along the rear part 17b of the right rear frame, and the fuel hoses and the electric harness are provided with them separated into the rear parts 17b of the right and left rear frames. Therefore, configurations for protecting the electric harness and the fuel hoses can be made common and lightening is enabled.

As described above, according to the embodiment to which the present invention is applied, as the housing part 86 and the feed water part 94 for the reservoir tank 89 are provided in the housing box under the seat 46 with them partitioned, the lid 88 which is provided to a part of the housing box 22 and which covers the feed water inlet 92a of the reservoir tank 89 is formed by the upper wall 120 and the side wall 121 and the upper wall 120 covers the upside of the feed water part 94 to which the feed water inlet 92a of the reservoir tank 89 is opposite, the feed water inlet 92a of the reservoir tank 89 is exposed in the upper part of the housing box 22 in a state in which the lid 88 is removed. Therefore, cooling water can be fed through the feed water inlet 92a utilizing the large space on the upside of the housing box 22 and the workability of work for feeding cooling water can be enhanced.

Besides, as the feed water part 94 is provided to the corner part C which is formed in the rear of the housing box 22 and on one side in the direction of vehicle width and which is dead space, the workability of feed water can be enhanced, securing the housing capacity of the housing box 22.

In addition, as the partition wall 100 which is protruded upward and which partitions the housing part 86 and the feed water part 94 is provided to the housing box 22 and the feed water part bottom wall 97 that surrounds the feed water inlet 92a is formed in the feed water part 94, the inflow of cooling water into the housing part 86 can be inhibited even if the cooling water is spilled in feed water. Moreover, the invasion of dust and others into the feed water part 94 from the outside of the housing box 22 can be inhibited by the feed water part bottom wall 97.

Further, as the window part 102 for checking a liquid level to which the reservoir tank 89 is opposite is provided in the lower part of the partition wall 100 and on the downside of the feed water part bottom wall 97 of the feed water part 94 and the window part 102 for a check is covered with the lid 88, a liquid level of the reservoir tank 89 can be also easily verified from the window part 102 for a check in the configuration including the partition wall 100 by removing the lid 88. Furthermore, as the window part 102 for a check is covered with the lid 88, the invasion of dust and others into the housing part 86 can be inhibited.

Furthermore, as the lid 88 is provided with the engaging piece 121a which is an engaging part to the housing box 22 on the side wall 121 and the fixing hole 120a which is fixed to the housing box 22 by means of fastening is provided to the upper wall 120, the lid 88 can be removed by only releasing the fixation of the fixing hole 120a and pulling up the lid fixing clip and workability in the detachment/attachment of the lid 88 is satisfactory.

Furthermore, as the fastening part 98 that fastens the housing box 22 to the body frame 11 is provided to the feed water part 94, the fastening part 98 that requires large fastening force to fix the housing box 22 can be covered with the lid 88 and the appearance quality is satisfactory.

Further, as the dual purpose stay 19a for fastening the body frame 11 and the housing box 22 is extended upward from the body frame 11 and the reservoir tank 89 is fixed to the dual purpose stay 19a, a special stay for fixing the reservoir tank 89 is not required and the number of parts can be reduced.

Furthermore, as the harness fixing part 109 is formed in the reservoir tank 89, the harness 110 can be fixed utilizing the reservoir tank 89 and the number of parts can be reduced.

Furthermore, according to the embodiment to which the present invention is applied, as the power supply socket 130 is provided to the side wall part 83 of the housing box 22, the main body 131 of the power supply socket 130 is provided between the housing box 22 and the body side cover 62 and the power supply port 132 is arranged in the housing box 22, the main body 131 of the power supply socket 130 can be provided utilizing the space K between the housing box 22 and the body side cover 62 and the vehicle can be compacted, being provided with the power supply socket 130.

Furthermore, as the rear part 17b of the rear frame is arranged outside the housing box 22 and inside the body side cover 62 and the power supply socket 130 is arranged on the upside of the rear part 17b of the rear frame, the power supply socket 130 can be protected from the downside by the rear part 17b of the rear frame.

Furthermore, as the step 28 for the occupant and the power supply socket 130 are arranged in positions overlapped in the longitudinal direction and the step 28 for the occupant is arranged outside the power supply socket 130 and the rear part 17b of the rear frame in the direction of vehicle width, the power supply socket 130 can be protected by the step 28 for the occupant.

Further, as the housing box 22 is provided with the housing part 86 that can house the helmet H and the power supply port 132 is arranged in the housing part 86, the rider and another person can easily find the mobile information terminal S and others connected to the power supply port 132 when they put/extract the helmet H in/from the housing and the mobile information terminal S and others can be prevented from being forgotten.

Furthermore, as the side kickstand 75 is provided on the left side in the direction of vehicle width and the power supply socket 130 is arranged on the right side wall part 83 of the housing box 22 on the reverse side to the side kickstand 75 in the direction of vehicle width, the housing box 22 is inclined on the side of the occupant in parking using the side kickstand 75 and a position of the right side wall part 83 to which the power supply socket 130 is provided is heightened. Therefore, the occupant can easily access the power supply socket 130.

Furthermore, as the main body 131 of the power supply socket 130 is arranged on the right side wall part 83 of the housing box 22, the canister 112 for evaporated fuel is provided outside the left side wall part 82 on the reverse side, the electric harness is arranged outside the right side wall part 83 and the fuel hoses is arranged outside the left side wall part 82 on the reverse side, the vehicle can be compacted effectively utilizing the space K outside each left and right side wall part 82, 83 of the housing box 22. Further, as the electric harness and the fuel hoses are arranged with them separated on the left side and on the right side of the housing box 22, the configurations for protecting the electric harness and the fuel hoses can be made common and the lightening is enabled.

Further, the harness can be guided utilizing the rear part 17b of the rear frame and the main body 131 so as to pass the plural pieces of electric harness including the harness 110 and the coupling cable 135a between the rear part 17b of the rear frame and the main body 131 of the power supply socket 130, and the reduction of the number of parts and the lightening are enabled.

The above-mentioned embodiment is merely one embodiment to which the present invention is applied and the present invention is not limited to the embodiment.

In the embodiment, it is described that the lid 88 is fastened to the fixing hole 90b in the rear of the receiver 90a by the lid fixing bolt 88a; however, the present invention is not limited to this, for example, a clip detachable/attachable in a single operation is inserted into the fixing hole 120a of the lid 88, the clip is engaged with the fixing hole 90b, and the lid 88 may be also fixed.

Furthermore, in the embodiment, it is described that the electric harness is passed between the rear part 17b of the rear frame and the main body 131 of the power supply socket 130; however, the present invention is not limited to this, and the fuel hoses may be also passed between the rear part 17b of the rear frame and the main body 131.

### [Reference Signs List]

- 10: Motorcycle (Saddle-ride type vehicle)
- 17b: Rear of rear frame (Body frame)
- 22: Housing box
- 27b: Fuel supply tube (Fuel hoses)
- 28: Step for occupant
- 46: Seat
- 62: Body side cover (Body cover)
- 75: Side kickstand
- 80: Bottom wall part (Bottom wall)
- 81: Front wall part (Front wall)
- 82: Side wall part (Side wall)
- 83: Side wall part (Side wall)
- 84: Rear wall part (Rear wall)
- 86: Housing part (Helmet housing part)
- 110: Harness (Electric harness)
- 112: Canister
- 113: Charge pipe (Fuel hoses)
- 118: Drain pipe (Fuel hoses)
- 130: Power supply socket (Accessory socket)
- 131: Main body
- 132: Power supply port
- H: Helmet

## Claims

1. Accessory socket layout structure of a saddle-ride type vehicle comprising:
a housing box (22) which is provided under a seat (46) for an occupant, which is provided with a front wall (81), a rear wall (84), a pair of left and right side walls (82, 83) and a bottom wall (80) and an upper part of which is closed by the seat (46);
a body cover (62) that covers the housing box (22) from the outside in a direction of vehicle width; and
an accessory socket (130) which is provided with a power supply port (132) and a main body (131) and which is provided to the housing box (22),
wherein: the housing box (22) is provided with a helmet housing part (86) that can house a helmet (H);
the main body (131) is provided between the housing box (22) and the body cover (62); and **characterised in that**
the power supply port (132) is arranged in the housing box (22) in the helmet housing part (86) and the accessory socket (130) is provided to the side wall(83) of the housing box(22), and is arranged closer to the rear wall part (84) than the front wall part (81) in the longitudinal direction and is located in front of a curved wall part (84c) in the rear of the housing part (86).

2. The accessory socket layout structure of the saddle-ride type vehicle according to Claim 1,
wherein: a body frame (17b) is arranged outside the housing box (22) and inside the body cover (62); and
the accessory socket (130) is arranged on the upside of the body frame (17b).

3. The accessory socket layout structure of the saddle-ride type vehicle according to Claim 2,
wherein: a step (28) for the occupant and the accessory socket (130) are arranged in positions overlapped in a longitudinal direction; and
the step (28) for the occupant is arranged outside the accessory socket (130) and the body frame (17b) in the direction of vehicle width.

4. The accessory socket layout structure of the saddle-ride type vehicle according to any of Claims 1 to 3,
wherein: a side kickstand (75) is provided on one side in the direction of vehicle width; and
the accessory socket (130) is arranged on the side wall (83) of the housing box (22) on the reverse side to the side kickstand (75) in the direction of vehicle width.

5. The accessory socket layout structure of the saddle-ride type vehicle according to any of Claims 1 to 4,
wherein: the main body (131) is arranged on the side wall (83) on one side in a lateral direction of the housing box (22);
a canister (112) for evaporated fuel is provided outside the side wall (82) on the reverse side in the lateral direction;
an electric harness (110) is arranged outside the side wall (83) on one side; and
fuel hoses (27b, 113, 118) are arranged outside the side wall (82) on the reverse side.

6. The accessory socket layout structure of the saddle-ride type vehicle according to Claim 2 or 3, wherein the harness (110) or the hoses is/are passed between the body frame (17b) and the main body (131).

## Patentansprüche

1. Zubehöranschlussdose-Anordnungsstruktur eines Fahrzeugs vom Spreitzsitz-Typ, umfassend:
eine Aufnahmebox (22), welche unter einem Sitz (46) für einen Fahrer/Beifahrer bereitgestellt ist, welcher mit einer vorderen Wand (81), einer hinteren Wand (84), einem Paar aus einer linken und einer rechten Seitenwand (82, 83) sowie einer Bodenwand (80) bereitgestellt ist, und wobei ein oberer Teil davon mittels des Sitzes (46) geschlossen ist;
eine Karosserieabdeckung (62), welche in einer Fahrzeugbreitenrichtung die Aufnahmebox (22) von der Außenseite abdeckt; und
eine Zubehöranschlussdose (130), welche mit einem Stromzuführanschluss (132) und einem Hauptkörper (131) bereitgestellt ist und welche der Aufnahmebox (22) bereitgestellt ist,
wobei: die Aufnahmebox (22) mit einem Helmaufnahmeteil (86) bereitgestellt ist, welcher einen Helm (H) aufnehmen kann;
der Hauptkörper (131) zwischen der Aufnahmebox (22) und der Karosserieabdeckung (62) bereitgestellt ist; und
**dadurch gekennzeichnet, dass**
der Stromzuführanschluss (132) in der Aufnahmebox (22) in dem Helmaufnahmeteil (86) angeordnet ist und die Zubehöranschlussdose (130) der Seitenwand (83) der Aufnahmebox (22) bereitgestellt ist und in der Längsrichtung näher an dem hinteren Wandteil (84) als an dem vorderen Wandteil (81) angeordnet ist und vor einem gebogenen Wandteil (84c) an der Rückseite des Aufnahmeteils (86) lokalisiert ist.

2. Zubehöranschlussdose-Anordnungsstruktur des Fahrzeugs vom Spreitzsitz-Typ nach Anspruch 1, wobei:
ein Karosserierahmen (17b) außerhalb der Aufnahmebox (22) und innerhalb der Karosserieabdeckung (62) angeordnet ist; und
die Zubehöranschlussdose (130) an der Oberseite des Karosserierahmens (17b) angeordnet ist.

3. Zubehöranschlussdose-Anordnungsstruktur des Fahrzeugs vom Spreitzsitz-Typ nach Anspruch 2, wobei:
eine Stufe (28) für den Fahrer/Beifahrer und die Zubehöranschlussdose (130) in in einer Längsrichtung überlappenden Positionen angeordnet sind; und
die Stufe (28) für den Fahrer/Beifahrer in der Fahrzeugbreitenrichtung außerhalb der Zubehöranschlussdose (130) und des Karosserierahmens (17b) angeordnet ist.

4. Zubehöranschlussdose-Anordnungsstruktur des Fahrzeugs vom Spreitzsitz-Typ nach einem der Ansprüche 1 bis 3, wobei:
ein Seitenständer (75) in der Fahrzeugbreitenrichtung an einer Seite bereitgestellt ist; und
die Zubehöranschlussdose (130) in der Fahrzeugbreitenrichtung an der Seitenwand (83) der Aufnahmebox (22) an der Rückseite des Seitenständers (75) angeordnet ist.

5. Zubehöranschlussdose-Anordnungsstruktur des Fahrzeugs vom Spreitzsitz-Typ nach einem der Ansprüche 1 bis 4, wobei:
der Hauptkörper (131) an der Seitenwand (83) in einer Querrichtung der Aufnahmebox (22) an einer Seite angeordnet ist;
ein Behälter (112) für verdampften Kraftstoff in der Querrichtung außerhalb der Seitenwand (82) an der Rückseite bereitgestellt ist;
ein elektrischer Kabelbaum (110) außerhalb der Seitenwand (83) an einer Seite angeordnet ist; und
Kraftstoffschläuche (27b, 113, 118) außerhalb der Seitenwand (82) an der Rückseite angeordnet sind.

6. Zubehöranschlussdose-Anordnungsstruktur des Fahrzeugs vom Spreitzsitz-Typ nach Anspruch 2 oder 3, wobei der Kabelbaum (110) oder die Schläuche zwischen dem Karosserierahmen (17b) und dem Hauptkörper (131) durchgeführt ist/sind.

## Revendications

1. Structure d'agencement de douille d'accessoire d'un véhicule de type à enfourcher comprenant :
une boîte de logement (22) qui est prévue sous un siège (46) pour un occupant, qui est dotée d'une paroi avant (81), d'une paroi arrière (84), d'une paire de parois latérales gauche et droite (82, 83) et d'une paroi inférieure (80) et dont une partie supérieure est fermée par le siège (46) ;
un couvercle de corps (62) qui couvre la boîte de logement (22) de l'extérieur dans une direction de largeur de véhicule ; et
une douille d'accessoire (130) qui est dotée d'un orifice d'alimentation électrique (132) et d'un corps principal (131) et qui est prévue sur la boîte de logement (22),
dans laquelle : la boîte de logement (22) est dotée d'une partie de logement de casque (86) qui peut loger un casque (H) ;
le corps principal (131) est prévu entre la boîte de logement (22) et le couvercle de corps (62) ; et **caractérisée en ce que**
l'orifice d'alimentation électrique (132) est agencé dans la boîte de logement (22) dans la partie de logement de casque (86) et la douille d'accessoire (130) est prévue sur la paroi latérale (83) de la boîte de logement (22), et est agencé plus près de la partie de paroi arrière (84) que de la partie de paroi avant (81) dans la direction longitudinale et est situé en face d'une partie de paroi courbée (84c) dans l'arrière de la partie de logement (86).

2. Structure d'agencement de douille d'accessoire du véhicule de type à enfourcher selon la revendication 1,
dans laquelle : un cadre de corps (17b) est agencé en dehors de la boîte de logement (22) et à l'intérieur du couvercle de corps (62) ; et
la douille d'accessoire (130) est agencée sur le côté supérieur du cadre de corps (17b).

3. Structure d'agencement de douille d'accessoire du véhicule de type à enfourcher selon la revendication 2,
dans laquelle : un marchepied (28) pour l'occupant et la douille d'accessoire (130) sont agencés dans des positions chevauchées dans une direction longitudinale ; et
le marchepied (28) pour l'occupant est agencé en dehors de la douille d'accessoire (130) et du cadre de corps (17b) dans la direction de largeur de véhicule.

4. Structure d'agencement de douille d'accessoire du véhicule de type à enfourcher selon l'une quelconque des revendications 1 à 3,
dans laquelle : une béquille latérale (75) est prévue sur un côté dans la direction de largeur de véhicule ; et
la douille d'accessoire (130) est agencée sur la paroi latérale (83) de la boîte de logement (22) sur le côté inverse à la béquille latérale (75) dans la direction de largeur de véhicule.

5. Structure d'agencement de douille d'accessoire du véhicule de type à enfourcher selon l'une quelconque des revendications 1 à 4,
dans laquelle : le corps principal (131) est agencé sur la paroi latérale (83) sur un côté dans une direction latérale de la boîte de logement (22) ;
un bidon (112) pour la vapeur de carburant est prévu en dehors de la paroi latérale (82) sur le côté inverse dans la direction latérale ;
un faisceau électrique (110) est agencé en dehors de la paroi latérale (83) sur un côté ; et
des tuyaux de carburant (27b, 113, 118) sont agencés en dehors de la paroi latérale (82) sur le côté inverse.

6. Structure d'agencement de douille d'accessoire du véhicule de type à enfourcher selon la revendication 2 ou 3, dans laquelle le faisceau (110) ou les tuyaux sont passés entre le cadre de corps (17b) et le corps principal (131).
